Europäisches Patentamt

European Patent Office

Office européen des brevets

(19)

(11) Veröffentlichungsnummer: **0 008 101**
**B1**

(12)

# EUROPÄISCHE PATENTSCHRIFT

(45) Veröffentlichungstag der Patentschrift:
**12.05.82**

(21) Anmeldenummer: **79102818.6**

(22) Anmeldetag: **06.08.79**

(51) Int. Cl.³: **C 09 C 1/36**, C 08 K 3/22,
D 01 F 1/04, C 09 D 3/00

(54) **Verfahren zur Herstellung von Titandioxidpigmenten mit hoher Wetterbeständigkeit und ihre Verwendung.**

(30) Priorität: **16.08.78 DE 2835880**

(43) Veröffentlichungstag der Anmeldung:
**20.02.80 Patentblatt 80/4**

(45) Bekanntmachung des Hinweises auf die Patenterteilung:
**12.05.82 Patentblatt 82/19**

(84) Benannte Vertragsstaaten:
**DE FR GB IT**

(56) Entgegenhaltungen:
**FR-A-1 400 378**
**FR-A-1 426 766**
**FR-A-2 184 694**
**GB-A-1 368 601**
**WORLD SURFACE COATING ABSTRACTS,
vol. 51, no. 433, Juli 1978, Seite 837, Zusammenfassung 78/4516. Teddington, Middlesex, GB**

(73) Patentinhaber: **BAYER AG, Zentralbereich Patente,
Marken und Lizenzen, D-5090 Leverkusen 1, Bayerwerk
(DE)**

(72) Erfinder: **Panek, Peter, Dr., Bodelschwinghstrasse 12,
D-4150 Krefeld (DE)**
Erfinder: **Woditsch, Peter, Dr., Deswatinesstrasse 83,
D-4150 Krefeld (DE)**
Erfinder: **Bayer, Eckhard, Dr., Grevenbroicher
Strasse 47, D-4150 Krefeld (DE)**
Erfinder: **Stütgens, Heribert, Dr., Deswatinesstrasse 84,
D-4150 Krefeld (DE)**

## Verfahren zur Herstellung von Titandioxidpigmenten mit hoher Wetterbeständigkeit und ihre Verwendung

Titandioxidpigmente haben aufgrund ihrer Brechzahl und der damit verbundenen hohen optischen Leistungsfähigkeit (z. B. Streu-, Aufhell- und Deckvermögen) breite Anwendung als Weißpigmente gefunden. Ihr Einsatz zur Herstellung von Farben, Oberflächenbeschichtungsmassen, Kunststoffen und anderen pigmentierten Materialien, die Außenbewitterungsbedingungen unterliegen, führt jedoch zu Produkten, die nicht so dauerhaft sind, wie dies wünschenswert ist. So geben $TiO_2$-Pigmente gelegentlich Anlaß zum langsamen Zerfall der Medien, in denen sie sich befinden, wenn Belichtung im Ultraviolettbereich, beispielsweise mit Sonnenlicht, erfolgt. Der langsame Zerfall der pigmentierten Medien kann an einem Glanzverlust und einem Kreiden der Produkte beobachtet werden. Es sind Verfahren bekannt, diesen Nachteil abzustellen oder wesentlich einzuschränken. Sie bestehen darin, die Pigmentteilchen nach entsprechender Trocken- und/oder Naßmahlung sowie gegebenenfalls nach einer Klassierung in gut dispergiertem Zustand nachzubehandeln. Dabei ist eine Umhüllung der Einzelteilchen notwendig, da sonst bei der Endmahlung durch Zerteilung von Agglomeraten und/oder Aggregaten unbehandelte Oberflächen freigelegt werden. Bekannt ist beispielsweise die Stabilisierung von Titandioxidpigmenten gegen Wettereinflüsse durch Fällung von Oxidhydraten des Siliciums und/oder des Aluminiums aus alkalischem Medium durch Zusatz alkalisch reagierender Silicium- und/oder Aluminiumverbindungen zu gut dispergierten Pigmentsuspensionen und langsame Fällung durch pH-Wert-Änderung (z. B. US 2 885 366). Das Verfahren ermöglicht das Aufbringen dichter Umhüllungsschichten und führt zu um so beständigeren Pigmenten, je größer die Mengen an aufgefällter anorganischer Nachbehandlungs-Substanz gewählt werden. Unerwünschterweise sinkt dabei die optische Leistungsfähigkeit so behandelter Pigmente, da bei Vorliegen großer Mengen dichter Umhüllungsschichten die Brechzahlen der Umhüllungssubstanzen anteilig wirksam werden, die deutlich niedrigere Werte aufweisen, als die des Titandioxidkerns. Ferner ist aus der US 2 378 790 bzw. 2 357 089 sowie der FR-A-1 426 766 bekannt, eine verbesserte Wetterstabilisierung von Titandioxidpigmenten zu erzielen, indem zusätzlich zur Fällung von Oxidhydraten des Siliciums und/oder Aluminiums eine Fällung von Titan und/oder Zirkoniumdioxidaquat vorgenommen wird. Dabei kommen als Titan- bzw. Zirkoniumdioxidquellen wäßrige Lösungen der entsprechenden Metallsulfate und/oder Metallchloride und/oder allgemein saurer reagierende Verbindungen dieser Elemente zum Einsatz. Ihre Verwendung bedingt aber Nachteile. Einmal führt das Eintragen der sauer reagierenden Titan- bzw. Zirkoniumsalzlösung in alkalische Pigmentsuspensionen an der Einlaßstelle zu einer momentanen Ausfällung von Titan- bzw. Zirkoniumoxidhydrat und damit nicht zu der erwünschten optimalen Umhüllung der Pigmenteinzelteilchen. Zum anderen bedingt der Zusatz der stark sauren Metallsalzlösungen in alkalische Titandioxidpigmentsuspensionen bei Neutral- bzw. Sauerstellung der Suspensionen eine Flockung der Pigmentteilchen, die unter üblichen Verarbeitungsbedingungen auch bei nachfolgendem Einstellen der Pigmentsuspensionen auf pH-Werte größer 7,5 nur sehr schwer wieder vollständig aufgehoben werden kann. Nachfolgende Fällungen von Oxidhydraten des Siliciums und/oder des Aluminiums, die bei saurer Einstellung der Pigmentsuspension in unerwünschter poröser Form anfallen, umhüllen auch bei alkalischer Suspensionseinstellung die dann vorliegenden Pigmentflockulate. Bei der abschließenden Mikronisierung des Endproduktes brechen diese Pigmentflockulate dann auf und legen dabei unbehandelte Pigmentoberflächen frei, so daß Pigmente mit nicht wesentlich verbesserter Kreidungsbeständigkeit und Glanzhaltung erhalten werden.

Ziel der vorliegenden Erfindung ist eine Verbesserung der Kreidungsbeständigkeit und Glanzhaltung von Titandioxidpigmenten.

Gegenstand der vorliegenden Erfindung ist somit ein Verfahren zur Herstellung von Titandioxidpigmenten mit verbesserter Kreidungsbeständigkeit und Glanzhaltung durch Umhüllen mit Oxiden und/oder Phosphaten des Titans, Zirkons, Aluminiums und Siliciums, das dadurch gekennzeichnet ist, daß das Zirkonium in Form alkalischer Zirkoniumcarbonatokomplexe der Alkalimetalle oder des Ammoniums einer wäßrigen alkalischen Pigmentsuspension zugesetzt und durch Zugabe von gelösten Verbindungen des Titans und/oder Aluminiums und/oder Siliciums und/oder Phosphors langsam ausgefällt wird.

Das erfindungsgemäße Verfahren gestattet es, homogene Fällungen aus der gesamten Pigmentsuspension — also nicht Fällungen an den Eintropfstellen der Nachbehandlungschemikalien — von Oxidhydraten und/oder Phosphaten des Zirkoniums, Siliciums, Titans und des Aluminiums auf Titandioxidpigmente aufzubringen.

Nachfolgend wird eine bevorzugte Ausführungsform des erfindungsgemäßen Verfahrens näher erläutert.

In dieser Ausführungsform werden beliebig nach dem Sulfat- oder Chloridprozeß erhaltene Titandioxidpigmente, gegebenenfalls nach einer Trockenmahlung in Wasser aufgeschlämmt, die erhaltene Suspension mit Natronlauge auf einen pH-Wert größer 7,5 gestellt und nach Zugabe von an sich bekannten Dispergierhilfsmitteln, wie z. B. Alkalimetallphosphaten und/oder Alkanolaminen, in Mengen unter 1 Gew.-%, bezogen auf Titandioxid, evtl. einer Naßmahlung und gegebenenfalls einer Klassierung unterworfen. Der alkalische Pigmentsuspension, die die Titandioxideinzelteilchen in gut dispergiertem Zustand enthält und einen Titandioxidgehalt von 20 bis 25 Gew.-% besitzt, werden dann 0,2 bis 5 Gew.-Teile Zirkoniumdioxid in Form alkalischer Zirkoniumcarbonato-Komplexe der Alkalimetalle oder des Ammoniums, danach 0,5 bis 10 Gew.-Teile Siliciumdioxid in Form einer alkalischen Wasserglaslösung und schließlich 0,5 bis 10 Gew.-Teile Aluminiumoxid (alle Mengenangaben bezogen auf eingesetztes Titandioxid) als Alkalimetallaluminat- und/oder als Aluminiumsulfatlösung langsam zugesetzt. Durch die Verwendung von Alkalimetallaluminat- und/oder Aluminiumsulfatlösung kann der Prozeß so geführt werden, daß die Suspension einen pH-Wert von etwa 7 aufweist, wenn die zur Umhüllung der Pigmentteilchen gewünschten Mengen an Nachbehandlungschemikalien in die Suspension eingeflossen sind. Gegebenenfalls kann eine pH-Korrektur mit alkalisch oder sauer reagierenden wäßrigen Lösungen von Verbindungen des Titans, Aluminiums, Siliciums oder Phosphors erfolgen. Danach wird das Pigment wie üblich durch Filtration isoliert und durch Waschen, Trocknen und Mikronisieren, gegebenenfalls in Anwesenheit organischer Dispergierhilfsmittel, aufgearbeitet.

Die erfindungsgemäßen realisierbaren homogenen, dichten und die Pigmentoberfläche gut belegenden und umhüllenden Fällungen der genannten Oxidhydrate und/oder Phosphate gelingen nur aus dem bzw. im alkalischen Bereich und setzen somit den Einsatz von alkalischen Zirkoniumkomplexlösungen voraus. Nach dem erfindungsgemäßen Verfahren können auch bei Verwendung von konzentrierten Lösungen an Nachbehandlungssubstanzen, bei Temperaturen unter 80°C und bei vertretbaren Nachbehandlungszeiten hoch wetterbeständige Titandioxidpigmente relativ kostengünstig erhalten werden. Das erfindungsgemäße Verfahren gestattet es weiterhin, hoch wetterbeständige Titandioxidpigmente auch bei Einsatz relativ geringer Gesamtmengen an anorganischer Nachbehandlungssubstanz herzustellen, so daß trotz des Aufbringens dichter Umhüllungsschichten die optische Leistungsfähigkeit der so behandelten Pigmente weitgehend unbeeinflußt bleibt.

Die für die Herstellung wetterbeständiger Titandioxidpigmente zur Nachbehandlung geeigneten alkalischen wäßrigen Lösungen von Zirkoniumcarbonatokomplexen der Alkalimetalle oder des Ammoniums können z. B. durch Eintragen von Zirkoniumsulfatlösungen in Alkalimetall- oder Ammoniumcarbonatlösungen hergestellt werden. So lassen sich beispielsweise Zirkoniumcarbonatokomplexlösungen mit Gehalten von 50 bis 100 g $ZrO_2$ pro Liter und pH-Werten von etwa 9 erhalten. Alkalisch reagierende, wäßrige Lösungen von Siliciumverbindungen weisen z. B. Gehalte von 300 bis 400 g/l $SiO_2$ und 80 bis 200 g $Na_2O$ pro Liter auf, alkalisch reagierende, wäßrige Lösungen von Aluminiumverbindungen Gehalte von 300 bis 350 g $Al_2O_3$ pro Liter und ca. 1,5 Mol $Na_2O$ pro Mol $Al_2O_3$. Weiterhin können zur Neutralisation bzw. zur pH-Korrektur der Pigmentsuspension beliebige Metallsalzlösungen des Titans, Siliciums, Aluminiums oder Phosphor eingesetzt werden, wie z. B. wäßrige Lösungen von Titanylsulfat, Titantetrachlorid, Siliciumtetrachlorid, Aluminiumsulfat, Aluminiumchlorid, Aluminiumnitrat, Phosphorsäure oder Alkalimetallphosphate.

Die Mengen an aufgefällten Oxidhydraten und/oder Phosphaten des Titans, Zirkoniums, Aluminiums und Siliciums können in weiten Grenzen variabel gehalten werden. Bevorzugt werden erfindungsgemäß hoch wetterbeständige Titandioxidpigmente erhalten, bei Zusatz von alkalischer Zirkoniumcarbonato-Komplexlösung der Alkalimetalle oder des Ammoniums mit einem pH-Wert größer 7, vorzugsweise größer 8,5, in einer Menge von 0,2 bis 5 Gew.-%, berechnet als $ZrO_2$ und bezogen auf eingesetztes Pigment, und zusätzliche Auffällung von 0,5 bis 10 Gew.-% $SiO_2$ und/oder 0,5 bis 10 Gew.-% $Al_2O_3$ und/oder 0,1 bis 5 Gew.-% $TiO_2$ als Oxide, Hydroxide oder Phosphate, jeweils bezogen auf eingesetztes Pigment.

Die erfindungsgemäßen Pigmente sind hervorragend für die Einfärbung von Lacken, Kunststoffen und Spinnfasern geeignet.

Zur Abprüfung der erfindungsgemäß hergestellten Titandioxidpigmente wurden sie in Lacke eingearbeitet und deren Kreidung und Glanz in Abhängigkeit von der Bewitterungsdauer ermittelt. Im einzelnen wurde folgendermaßen verfahren:

Die Pigmente wurden in ein Lackbindemittel auf Basis eines Alkydharzes mit einer Pigmentvolumenkonzentration von 15% eingearbeitet und der Lack nach Dispergierung auf einer Planetmühle auf gealterte Al-Bleche aufgetragen. Nach einer Mindestalterung von 8 Tagen wurden die Bleche im Weatherometer bewittert, wobei der Sprüh-Trockenzyklus 3 zu 17 Minuten betrug. Das Kreidungsverhalten der Lackfilme wurde anhand des Kempf-Stempeltests DIN 53 159 (ASTM) verfolgt und aus den Bewitterungszeiten bis zur Kreidungsstufe 1 (Beginn der Kreidung) X1 und der Zeit bis zur Kreidungsstufe 5 (starke Kreidung) X5 sowie aus den Vergleichsdaten für ein Standardpigment S₁ und S₅ (Zeiten bis Kreidungsstufe 1 bzw. 5 für das Standardpigment) eine Kreidungsnote entsprechend folgender Beziehung berechnet:

$$N = \left(\frac{X_1}{S_1} + \frac{X_5}{S_5}\right) \cdot \frac{100}{2} \; .$$

Je höher der Wert für N ermittelt wird, als desto stabiler gegen Wettereinflüsse erweist sich das Pigment.

Der Glanz wurde an den gleichen Lackfilmen mit einem Multigloss-Glanzmesser unter einem Winkel von 20° gemessen. Als Meßwert für die Glanzhaltung diente die Zeit, bis zu der Glanz der Probe auf 25% des Maximalglanzes abgesunken war im Vergleich zu dem entsprechenden Wert für das Standardpigment.

Nachfolgend wird das erfindungsgemäße Verfahren beispielhaft erläutert:

## Beispiel 1

5 kg eines nach dem Chloridprozeß hergestellten Rutil-Pigments wurden unter Zusatz von Natronlauge, Natriummetaphosphat und einem Gemisch aus Mono- und Diisopropanolamin als Dispergierhilfsmittel in entsalztem Wasser angeteigt und einer einstündigen Perlmahlung unterworfen. Durch weiteren Zusatz von entsalztem Wasser wurde eine 20 Gew.-% Titandioxid enthaltende Suspension mit einem pH-Wert von 9 hergestellt und zur Nachbehandlung auf 60°C erwärmt.

Unter kräftigem Rühren und Konstanthalten der Temperatur wurde der Suspension erfindungsgemäß 1 Gew.-% $ZrO_2$, bezogen auf eingesetztes Pigment, als wäßrige Lösung eines Zirkoniumkarbonatokomplexes des Ammoniums mit einem Gehalt von 50 g $ZrO_2$/l und einem pH-Wert von ca. 9 in 15 Minuten zugesetzt und 30 Minuten nachgerührt. Der pH-Wert der Suspension veränderte sich dabei nicht.

Nach Vorlage von konzentrierter Natronlauge in 15 Minuten in die Pigmentsuspension erfolgte der Zusatz einer 3,8 Gew.-% $SiO_2$, bezogen auf Pigment, entsprechenden Menge Wasserglaslösung mit einem Gehalt von 360 g $SiO_2$/l in 60 Minuten und einer Nachrührzeit von 90 Minuten. Der pH-Wert der Suspension lag danach bei 12. Anschließend folgte die Zugabe einer Aluminiumsulfatlösung mit einem Gehalt von 106 g $Al_2O_3$/l in 180 Minuten bis der pH-Wert der Suspension 7 erreichte, entsprechend einer Fällung von 3,7 Gew.-% $Al_2O_3$, bezogen auf eingesetztes Pigment. Nach einer Nachrührzeit von 60 Minuten wurde die Suspension filtriert und das isolierte Pigment wiederholt mit entsalztem Wasser gewaschen, 12 Stunden bei 150 bis 180°C in einem Trockenschrank getrocknet und anschließend in einer Dampfstrahlmühle mikronisiert.

## Beispiel 2

### (Vergleichsbeispiel)

Das gleiche Rutilpigment wie in Beispiel 1 wurde zu Vergleichszwecken, wie in Beispiel 1 beschrieben, zur Nachbehandlung vorbereitet. Die Nachbehandlung erfolgte wie folgt:

Unter kräftigem Rühren und Konstanthalten der Temperatur wurde der Suspension 1 Gew.-% $TiO_2$ als Titanylsulfatlösung mit ienem Gehalt von 250 g $TiO_2$/l, bezogen auf eingesetztes Pigment, in 15 Minuten zugesetzt und 30 Minuten nachgerührt. Der pH-Wert der Suspension fiel dabei auf etwa 1 ab.

Danach folgte, jeweils bezogen auf eingesetztes Pigment, die Zugabe einer 3,8 Gew.-% $SiO_2$ entsprechenden Menge einer Na-Wasserglaslösung mit einem Gehalt von 360 g $SiO_2$/l in 15 Minuten mit einer Nachrührzeit von 60 Minuten, Einstellen des pH-Wertes mit Natronlauge auf 7,0 in 15 Minuten, Vorlage von Natronlauge in 15 Minuten mit einer Nachrührzeit von 60 Minuten und Zusatz von 4,1 Gew.-% $Al_2O_3$ aus einer wäßrigen Aluminiumsulfatlösung mit einem Gehalt von 106 g $Al_2O_3$/l in 15 Minuten.

Die Natronlaugevorlage war dabei so berechnet, daß die Pigmentsuspension am Ende des Zulaufs der $Al_2(SO_4)_3$-Lösung einen pH-Wert von ca. 8 aufwies. Nach einer Nachrührzeit von 120 Minuten wurde die Suspension filtriert und das isolierte Pigment wie in Beispiel 1 beschrieben, aufgearbeitet.

## Beispiel 3

### (Vergleichsbeispiel)

Das gleiche Rutilpigment wie in Beispiel 1 und 2 wurde mit den gleichen Mengen an Nachbehandlungssubstanzen, wie in Beispiel 2 beschrieben, nachbehandelt, nur wurde anstelle von 1 Gew.-% $TiO_2$ aus einer Titanylsulfatlösung 1 Gew.-% $ZrO_2$ aus einer Zirkonylchloridlösung mit einem Gehalt von 100 g $ZrO_2$/l auf das eingesetzte Pigment aufgefällt. Im übrigen wurden die Fällreihenfolgen, die Fällzeiten, die pH-Bereiche und die Nachrührzeiten, wie in Beispiel 2 angegeben, unverändert übernommen.

Die Zusätze entsprachen somit 1% $ZrO_2$, 3,8% $SiO_2$ und 4,1% $Al_2O_3$, jeweils bezogen auf eingesetztes Pigment. Die Aufarbeitung des Pigments erfolgte wie in Beispiel 1 angegeben.

4

## Beispiel 4

### (Vergleichsbeispiel)

Das gleiche Rutilpigment wie in Beispiel 1 bis 3 wurde, wie in Beispiel 1 beschrieben, zur Nachbehandlung vorbereitet.

Nach Vorlage von konzentrierter Natronlauge wurde die Pigmentsuspension mit einer 3 Gew.-% $SiO_2$ entsprechenden Menge Na-Wasserglaslösung eines Gehaltes von 360 g $SiO_2$/l in 15 Minuten versetzt und 15 Minuten nachgerührt. Der pH-Wert der Suspension lag danach bei 12. Anschließend folgte der Zusatz einer Aluminiumsulfatlösung mit einem Gehalt von 106 g $Al_2O_3$/l in 60 Minuten bis der pH-Wert der Suspension 7 erreichte, entsprechend einer Fällung von 3 Gew.-% $Al_2O_3$, bezogen auf eingesetztes Pigment. Nach einer Nachrührzeit von 60 Minuten wurde der soeben beschriebene Zusatz von Nachbehandlungschemikalien in gleicher Reihenfolge wiederholt, ohne das vorbehandelte Pigment zwischenzeitlich zu isolieren, also nach Natronlaugevorlage erneut 3 Gew.-% $SiO_2$ als Na-Wasserglaslösung und anschließend 2,5 Gew.-% $Al_2O_3$ als Aluminiumsulfatlösung bis zur Neutralreaktion zugesetzt. Nach 60minütiger Nachrührzeit erfolgte die Aufarbeitung des Pigments wie in Beispiel 1 beschrieben.

## Beispiel 5

Das gleiche Rutilpigment wie in den obengenannten Beispielen wurde, entsprecehnd Beispiel 1, zur Nachbehandlung vorbereitet.

Zu der alkalisch reagierenden Pigmentsuspension wurde unter kräftigem Rühren und Konstanthalten der Temperatur erfindungsgemäß 1 Gew.-% $ZrO_2$, bezogen auf eingesetztes Pigment, als wäßrige Lösung eines Zirkoniumcarbonatkomplexes des Natriums mit einem Gehalt von 71 g $ZrO_2$/l und einem pH-Wert von 9 in 15 Minuten zugesetzt und 30 Minuten nachgerührt. Der pH-Wert der Suspension veränderte sich dabei nicht.

Nach Vorlage von konzentrierter Natronlauge in 15 Minuten in die Pigmentsuspension erfolgte der Zusatz einer 3 Gew.-% $SiO_2$, bezogen auf eingesetztes Pigment, entsprechenden Menge Wasserglaslösung mit einem Gehalt von 360 g $SiO_2$/l in 60 Minuten und einer Nachrührzeit von 90 Minuten. Der pH-Wert der Suspension lag danach bei 12. Anschließend folgte die Zugabe einer Aluminiumsulfatlösung mit einem Gehalt von 106 g $Al_2O_3$/l in 180 Minuten bis der pH-Wert der Suspension 7 erreichte, entsprechend einer Fällung von 3,7% $Al_2O_3$, bezogen auf eingesetztes Pigment. Nach einer Nachrührzeit von 60 Minuten wurde das Pigment wie in Beispiel 1 beschrieben, aufgearbeitet.

Die nach den Beispielen 1 bis 5 hergestellten Produkte wurden, wie oben beschrieben, bezüglich Kreidungsbeständigkeit und Glanzhaltung abgeprüft. Die Ergebnisse sind in der folgenden Tabelle zusammengestellt.

Tabelle:

| Beispiel | Nachbehandlung mit | Kreidungsnote $N^{1)}$ | Glanzhaltung[2]) |
|---|---|---|---|
| 1 | 1% $ZrO_2$ aus $CO_3$-Komplex | 160 | 1,50 |
|   | 3,8% $SiO_2$ | | |
|   | 3,7% $Al_2O_3$ | | |
| 2 | 1% $TiO_2$ aus $TiOSO_4$-Lsg. | 112 | 1,14 |
|   | 3,8% $SiO_2$ | | |
|   | 4,1% $Al_2O_3$ | | |
| 3 | 1% $ZrO_2$ aus $ZrOCl_2$-Lsg. | 114 | 1,21 |
|   | 3,8% $SiO_2$ | | |
|   | 4,1% $Al_2O_3$ | | |
| 4 | 3% $SiO_2$ | 124 | 1,29 |
|   | 3% $Al_2O_3$ | | |
|   | 3% $SiO_2$ | | |
|   | 2,5% $Al_2O_3$ | | |
| 5 | 1% $ZrO_2$ aus $CO_3$-Komplex | 144 | 1,54 |
|   | 3% $SiO_2$ | | |
|   | 3,7% $Al_2O_3$ | | |

$$^{1)}\ N = \frac{X_1}{S_1}\ \frac{X_5}{S_5}\ \frac{100}{2}\ .$$

$$^{2)}\ \frac{\text{Probe (Zeit bis Glanzabfall auf 25\% des Maximalglanzes)}}{\text{Standard (Zeit bis Glanzabfall auf 25\% des Maximalglanzes)}}\ .$$

Aus den in der Tabelle zusammengestellten Ergebnissen wird deutlich, daß Nachbehandlungsverfahren, bei denen es infolge des Zusatzes von stark sauer reagierenden Salzlösungen in eine alkalische Pigmentsuspension frühzeitig zu einer Pigmentflockung kommt und bei denen keine homogene Fällung der Nachbehandlungssubstanzen aus alkalischer Lösung erfolgt, bezüglich Kreidungsbeständigkeit und Glanzhaltung schlechtere Produkte (Beispiel 2) liefern als Nachbehandlungsverfahren, bei denen die Pigmente aus alkalischer Lösung homogen mit dichten Schichten von Nachbehandlungssubstanzen umgeben werden und bei denen die Pigmentflockung erst gegen Ende der Nachbehandlung auftritt (Beispiel 4).

Weiterhin wird gezeigt, daß durch eine Nachbehandlung unter Verwendung von Zirkonylchloridlösungen eine gewisse Verbesserung der Kreidungsbeständigkeit und Glanzhaltung erreicht wird (Beispiel 3), wenn nach dem Fällschema des Beispiels 2 vorgegangen wird. Die Verbesserung ist jedoch nur gering, so daß sie weder den technischen Aufwand noch die Kosten für die Zirkonylsalzlösung rechtfertigt.

Im Gegensatz dazu wird überraschenderweise eine deutliche Verbesserung der Kreidungsbeständigkeit und Glanzhaltung von Titandioxid-Pigmenten dann erreicht, wenn erfindungsgemäß alkalische, gegebenenfalls an sich bekannte Dispergierhilfsmittel enthaltende Titandioxid-Pigmentsuspensionen, in denen die Pigmentteilchen in gut dispergiertem Zustand vorliegen, vor der Neutralstellung mittels sauer reagierender Verbindungen des Titans, Aluminiums, Siliciums oder Phosphors und über den Zusatz von alkalisch reagierenden wäßrigen Lösungen einer Silicium- und/oder einer Aluminiumverbindung hinaus, langsam mit einer alkalisch reagierenden wäßrigen Lösung eines Zirkoniumkarbonatokomplexes der Alkalimetalle oder des Ammoniums versetzt werden (Beispiele 1 und 5).

Nachfolgend sind weitere Beispiele für die Durchführung des erfindungsgemäßen Nachbehandlungsverfahrens aufgeführt:

### Beispiel 6

Ein nach dem Sulfat-Verfahren erhaltenes Rutilpigment wurde wie in Beispiel 1 zur Nachbehandlung vorbereitet.

Zu der alkalischen Pigmentsuspsion wurden unter kräftigem Rühren bei 60°C 1 Gew.-% $ZrO_2$, bezogen auf eingesetztes Pigment, als wäßrige Lösung des in Beispiel 5 beschriebenen Zirkoniumcarbonatokomplexes in 15 Minuten zugesetzt und 30 Minuten nachgerührt. Der pH-Wert der Suspension blieb dabei unverändert.

Danach folgte der Zusatz einer 3 Gew.-% $Al_2O_3$, bezogen auf eingesetztes Pigment, entsprechende Menge einer Natriumaluminatlösung mit einem Gehalt von 340 g $Al_2O_3$/l in Minuten und eine Nachrührzeit von 60 Minuten (pH ca. 12) sowie abschließend Rückstellung des pH-Wertes mit 15%iger Schwefelsäure in 180 Minuten auf pH 7,5.

Die Aufarbeitung des Pigments erfolgte entsprechend Beispiel 1.

### Beispiel 7

Ein nach dem Sulfat-Prozeß erhaltenes Rutil-Pigment wurde wie in Beispiel 1 zur Nachbehandlung vorbereitet.

Zu der alkalischen Pigmentsuspension wurde unter kräftigem Rühren bei 60°C 1 Gew.-% $ZrO_2$, bezogen auf eingesetztes Pigment, als wäßrige Lösung des in Beispiel 5 beschriebenen Zirkoniumcarbonatkomplexes in 15 Minuten zugesetzt und 30 Minuten nachgerührt. Der pH-Wert der Suspension blieb dabei unverändert. Danach folgte der Zusatz von 2,5 Gew.-% $SiO_2$, bezogen auf eingesetztes Pigment, als Wasserglaslösung mit 360 g $SiO_2$/l in 15 Minuten und einer Nachrührzeit von 60 Minuten, von 2,5 Gew.-% $Al_2O_3$, bezogen auf eingesetztes Pigment, als Natriumaluminatlösung mit 340 g $Al_2O_3$/l in 90 Minuten und einer Nachrührzeit von 60 Minuten sowie von 1 Gew.-% $P_2O_5$ aus 10%iger Phosphorsäurelösung und 1 Gew.-% $TiO_2$, jeweils bezogen auf eingesetztes Pigment, in Form einer wäßrigen $TiCl_4$-Lösung mit 165 g $TiO_2$/l gemeinsam in 60 Minuten. Nach einer Rührzeit von 60 Minuten wurde das Pigment entsprechend Beispiel 1 aufgearbeitet.

Die nach den Beispielen 6 und 7 hergestellten Pigmente wiesen eine gute Kreidungsbeständigkeit und Glanzhaltung auf.

## Patentansprüche

1. Verfahren zur Herstellung von Zirkonium enthaltenden Titandioxidpigmenten mit verbesserter Kreidungsbeständigkeit und Glanzhaltung durch Umhüllen mit Oxiden und/oder Phosphaten des Titans, Zirkoniums, Aluminiums und Siliciums, dadurch gekennzeichnet, daß Zirkonium in Form einer Lösung alkalischer Zirkoniumcarbonatokomplexe der Alkalimetalle oder des Ammoniums einer wäßrigen alkalischen Pigmentsuspension zugesetzt und durch Zugabe von gelösten Verbindungen des Titans und/oder Aluminiums und/oder Siliciums und/oder Phosphors langsam ausgefällt wird.

2. Verfahren gemäß Anspruch 1, dadurch gekennzeichnet, daß die wäßrige Zirkoniumcarbonatokomplexlösung mit einem pH-Wert größer 7, vorzugsweise größer 8,5, in Mengen von 0,2 bis 5 Gew.-%, berechnet als $ZrO_2$ und bezogen auf eingesetztes Pigment, zugesetzt wird.

3. Verfahren gemäß einem der Ansprüche 1 und 2, dadurch gekennzeichnet, daß 0,5 bis 10 Gew.-% $SiO_2$ und/oder 0,5 bis 10 Gew.-% $Al_2O_3$, jeweils bezogen auf eingesetztes Titandioxidpigment, als Oxid, Hydroxid und/oder Phosphat gefällt wird.

4. Verfahren gemäß einem der Ansprüche 1 bis 3, dadurch gekennzeichnet, daß 0,1 bis 5 Gew.-% $TiO_2$, bezogen auf eingesetztes Pigment, als Oxid, Hydroxid und/oder Phosphat gefällt wird.

5. Verwendung der gemäß Ansprüchen 1 bis 4 hergestellten Pigmente zur Einfärbung von Lacken, Kunststoffen und Spinnfasern.

## Claims

1. A process for the production of zirconium-containing titanium dioxide pigments with improved chalking resistance and gloss retention by coating with oxides and/or phosphates of titanium, zirconium, aluminium and silicon, characterised in that the zirconium is added to an aqueous alkaline pigment suspension in the form of a solution of alkaline zirconium carbonate complexes of the alkali metals or ammonium and slowly precipitated by the addition of dissolved compounds of titanium and/or aluminium and/or silicon and/or phosphorus.

2. A process according to Claim 1, characterised in that the aqueous zirconium carbonate complex solution, which has a pH-value above 7 and preferably above 8.5, is added in quantities of from 0.2 to 5% by weight, expressed as $ZrO_2$ and based on the pigment used.

3. A process according to one of Claims 1 to 2, characterised in that from 0.5 to 10% by weight of $SiO_2$ and/or from 0.5 to 10% by weight of $Al_2O_3$, based in each case on the titanium dioxide pigment used, are precipitated in oxide, hydroxide and/or phosphate form.

4. A process according to one of Claims 1 to 3, characterised in that from 0.1 to 5% by weight of $TiO_2$, based on the pigment used, is precipitated in oxide, hydroxide, and/or phosphate form.

5. The used of the pigments produced in accordance with Claims 1 to 4 for pigmenting lacquers, plastics materials and spun fibres.


## Revendications

1. Procédé de préparation de bioxydes de titane pigmentaires contenant du zirconium et présentant une résistance améliorée au farinage et une meilleure conservation de leur brillance par enrobage à l'aide d'oxydes et/ou de phosphates du titane, du zirconium, de l'aluminium et du silicium, caractérisé en ce que du zirconium est ajouté à une suspension aqueuse alcaline du pigment sous la forme d'une solution de complexes carbonatés alcalins du zirconium de métaux alcalins ou d'ammonium, et précipité lentement par addition de composés du titane et/ou de l'aluminium et/ou du silicium et/ou du phosphore en solution.

2. Procédé selon la revendication 1, caractérisé en ce que la solution aqueuse de complexes carbonatés du zirconium est ajoutée, à un pH supérieur à 7, de préférence supérieur à 8,5, en quantités de 0,2 à 5% en poids, calculées en $ZrO_2$, par rapport au pigment mis en œuvre.

3. Procédé selon l'une des revendications 1 et 2, caractérisé en ce que l'on précipite de 0,5 à 10% en poids de $SiO_2$ et/ou de 0,5 à 10% en poids d'$Al_2O_3$, dans les deux cas par rapport au bioxyde de titane pigmentaire mis en œuvre, à l'état d'oxyde/hydroxyde et/ou de phosphate.

4. Procédé selon l'une des revendications 1 à 3, caractérisé en ce que l'on précipite de 0,1 à 5% en poids de $TiO_2$, par rapport au pigment mis en œuvre, à l'état d'oxyde, d'hydroxyde et/ou de phosphate.

5. Utilisation des pigments préparés selon l'une des revendications 1 à 4, pour la coloration de peintures et vernis, résines synthétiques et fibres de filage.